# EUROPEAN PATENT SPECIFICATION

(11) **EP 2 564 123 B1**
(45) Date of publication and mention of the grant of the patent: **01.10.2014**
(21) Application number: 11725498.7
(22) Date of filing: 27.04.2011
(51) Int. Cl.: F24H 1/12, F24H 1/14, F24H 9/14

(54) **LIQUID HEATING BOILER**
FLÜSSIGKEITSERHITZENDER KESSEL
CHAUDIÈRE DE CHAUFFAGE DE LIQUIDE

(30) Priority: 27.04.2010 IT TO20100351
(43) Date of publication of application: 06.03.2013
(73) Proprietor: N&W Global Vending S.p.A., Valbrembo (IT)
(72) Inventor: MAGNO, Alessandro, I-24030 Brembate Sopra (IT)
(74) Representative: Bergadano, Mirko
(86) International application number: PCT/IB2011/000908
(87) International publication number: WO 2011/135441

(56) References cited:
- EP-A1- 1 653 163
- EP-A2- 1 316 762
- DE-A1- 19 613 579
- DE-U1-202004 009 349
- GB-A- 1 523 763
- US-A1- 2009 067 824

## Description

### TECHNICAL FIELD

The present invention relates to a boiler for heating a liquid, in particular water.

More specifically, the present invention relates to a boiler of the type comprising at least one module, in turn comprising a conduit having two open opposite axial ends; two removable caps for closing respective axial ends; an electric resistor extending the full length of the conduit to define, between itself and the conduit, an annular-section channel of the same length as the conduit; and a tubular inlet fitting and tubular outlet fitting, which communicate with the annular-section channel, are located close to the opposite axial ends of the annular-section channel, are separate from the caps, are fitted directly to the conduit, and communicate with the annular-section channel through respective radial holes formed through the conduit.

### BACKGROUND ART

Boilers of this sort are described, for example, in GB-1 523 763.

The present invention is particularly advantageous for use in applications requiring repeat supply of a given amount of liquid, normally water, at a relatively high temperature, and in particular in hot-beverage vending machines, to which the following description refers purely by way of example.

Hot-beverage vending machines need boilers of the above type which are not only capable of producing hot water in varying amounts and at different temperatures, depending on the beverages selected, but can also be opened and inspected easily for fast, easy maintenance and cleaning, as required when the hot water, as in the case of vending machines, is meant for consumption.

In known boilers of the above type, the inlet and outlet fittings are normally fitted to the caps.

This makes the fittings easier to orient when installing multiple-module boilers, but has the drawback that any maintenance or cleaning work, for which the caps must be removed, necessarily calls for dismantling the whole boiler.

Moreover, because the electric resistors of known boilers of the above type are through-fitted, for safety reasons, with their terminals outside the boiler body, each end of each module requires two different sealing systems - one between the cap and the resistor, and the other, which is particularly complex, between the cap and the conduit - both of which must be removed completely for access to the inside of the boiler.

### DISCLOSURE OF INVENTION

It is an object of the present invention to provide a boiler, preferably a modular boiler, designed to eliminate the above drawbacks and enable fast, easy maintenance and cleaning.

According to the present invention, there is provided a liquid-heating boiler as claimed in Claim 1 and preferably in any one of the following Claims depending directly or indirectly on Claim 1.

### BRIEF DESCRIPTION OF THE DRAWINGS

A non-limiting embodiment of the invention will be described by way of example with reference to the accompanying drawings, in which :
Figure 1 shows an exploded view in perspective of a preferred embodiment of the boiler according to the present invention;
Figure 2 shows a plan view of the Figure 1 boiler;
Figure 3 shows a section along line III-III in Figure 2;
Figure 4 shows a section along line IV-IV in Figure 3;
Figure 5 shows a larger-scale axial section of a detail of a variation of the Figure 1 boiler.

### BEST MODE FOR CARRYING OUT THE INVENTION

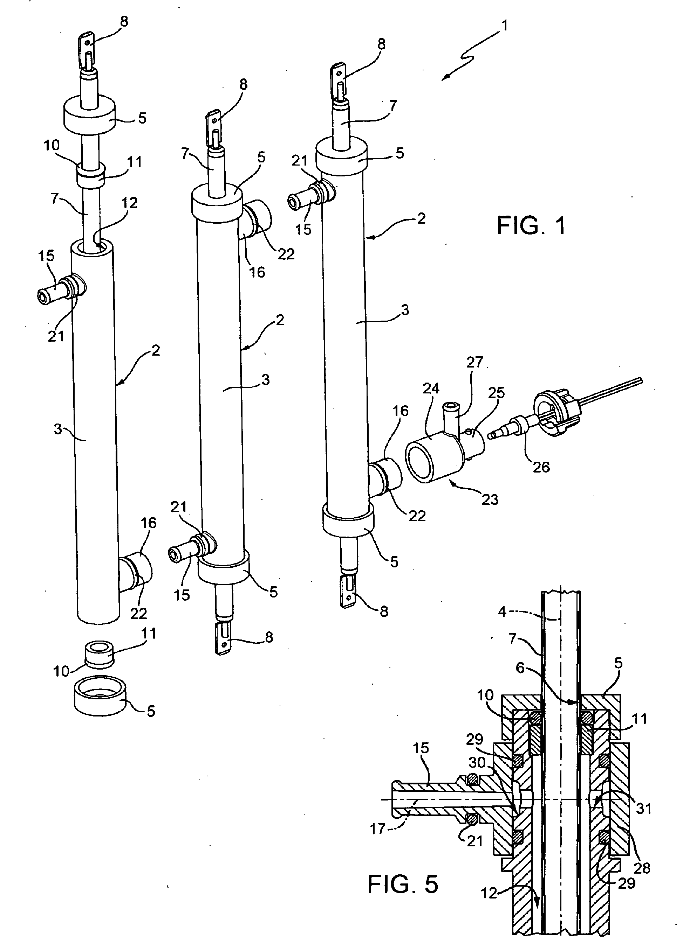

Number 1 in Figure 1 indicates as a whole a boiler for instantaneously heating water and/or producing steam.

Boiler 1 is a modular boiler defined by one or more identical, releasably series-connected modules 2.

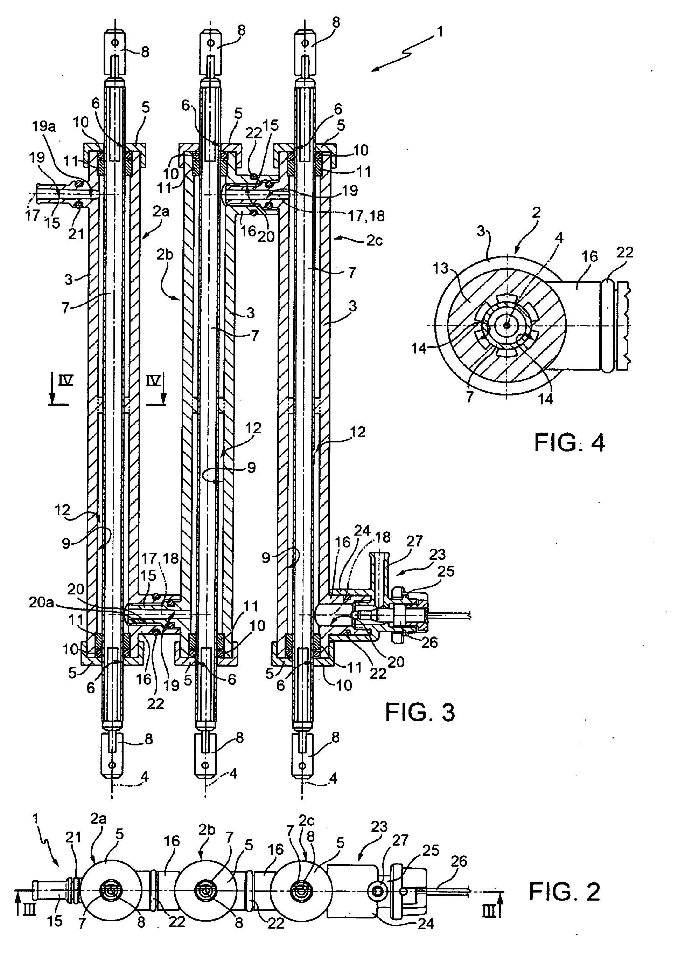

As shown more clearly in Figure 3, each module 2 comprises a cylindrical conduit 3 having an axis 4 and closed at each end by a pressure or screw cap 5 having an axial hole 6 engaged in sliding manner by a shielded resistor 7.

Resistor 7 extends the full length of conduit 3, has end portions projecting from conduit 3 and each fitted with an electric terminal 8, and is fitted to an inner surface 9 of conduit 3 with the interposition of two annular seals 10, each of which is fitted to shielded resistor 7, is located close to a respective cap 5, and is locked axially to cap 5 by a spacer 11, so that, when each cap 5 is fitted to the respective end of conduit 3, respective seal 10 deforms, thus locking resistor 7 in fluidtight manner to inner surface 9 of conduit 3 and to the inner surface of respective cap 5, at respective hole 6.

Inside conduit 3, resistor 7 defines an annular-section channel 12 divided into two axial portions by an annular rib 13 (Figure 4), which projects inwards from inner surface 9 to contact the outer surface of resistor 7 and lock resistor 7 transversely in position with respect to conduit 3, and has a number of radial cavities 14 connecting the two axial portions of channel 12.

Each module 2 comprises a tubular inlet fitting 15 and a tubular outlet fitting 16, each extending radially outwards from conduit 3, close to relative cap 5. More specifically, tubular inlet and outlet fittings 15, 16 have respective axes 17, 18, which intersect axis 4 and, when projected in a plane perpendicular to axis 4, form an angle of 180°, in the example shown, but which may range from 0° to 180°.

As shown in Figure 3, tubular inlet and outlet fittings 15, 16 have different outside diameters, are complementary in shape, and have respective inner axial channels 19, 20 coaxial with respective axes 17, 18 and communicating with channel 12 through respective radial holes 19a, 20a formed through conduit 3.

One of the two tubular fittings - in the example shown, tubular inlet fitting 15 - has an outside diameter slightly smaller than the inside diameter of the other tubular fitting - in the example shown, tubular outlet fitting 16 - and has, on its outer surface, an annular groove engaged by an annular seal 21. Similarly, the other tubular fitting - in the example shown, tubular outlet fitting 16 - has, on its outer surface, an annular groove engaged by an annular seal 22.

In a variation not shown, boiler 1 comprises one module 2, the tubular inlet fitting 15 of which is connectable to a water supply, and the tubular outlet fitting 16 of which is connectable to a user device.

In the Figure 3 example, boiler 1 is formed by assembling two or more modules 2 - in the example shown, three modules 2 indicated 2a, 2b, 2c, by inserting tubular inlet fitting 15 of module 2b in fluidtight manner inside tubular outlet fitting 16 of module 2a, and inserting tubular inlet fitting 15 of module 2c in fluidtight manner inside tubular outlet fitting 16 of module 2b. In boiler 1 so formed, tubular inlet fitting 15 of module 2a forms the inlet, and tubular outlet fitting 16 of module 2c the outlet, of boiler 1.

The outlet of boiler 1 is preferably connected indirectly to a user device by a hydraulic joint 23 comprising a conduit, one end portion 24 of which fits in fluidtight manner onto the outlet of boiler 1, and another end portion 25 of which is engaged in fluidtight manner by a temperature-control probe 26. In an intermediate position between end portions 24 and 25, hydraulic joint 23 has a radial outlet fitting 27.

In actual use, the water for heating flows into boiler 1 through inlet fitting 15 of module 2a, and, as it flows along channels 12 of modules 2a, 2b, 2c to fitting 27 of hydraulic joint 23, is heated by respective resistors 7, the power of which is set according to the desired water temperature.

In connection with the above, it is important to note the high degree of versatility of boiler 1, which, by virtue of its modular design, is easily adaptable to different requirements in terms of both the amount of water to produce at a given temperature, and the final water temperature. That is, given the heating power of a module 2, boiler 1 can be 'sized' to a specific application by simply assembling the appropriate number of modules 2. For example, for a given final water temperature, boiler 1 can produce amounts of hot water in direct proportion to the number of modules 2 of which it is composed.

Resistors 7 are preferably activatable independently, to permit control of final water temperature for a given number of modules 2 of boiler 1.

Boiler 1 may be variously configured, depending on how modules 2 are assembled, for easier location of boiler 1 and more efficient use of the space inside the vending machine. In Figure 3, for example, modules 2a, 2b, 2c are assembled with respective axes 4 coplanar, so boiler 1 extends widthwise. By simply rotating each tubular inlet fitting 15 with respect to the tubular outlet fitting 16 to which it is connected, a different configuration of boiler 1 can be obtained, e.g. in which boiler 1 extends lengthwise.

Other configurations of boiler 1, different from those obtainable from boiler 1 shown in the attached drawings, can be obtained, for example, using modules 2, in which axes 17 and 18 form an angle other than 180°. In which case, it is possible, for example, to obtain a substantially curved boiler 1.

A high degree of versatility, in terms of assembly, is obtainable using the Figure 5 variation, in which one of the two tubular fittings - in the example shown, tubular inlet fitting 15 - can be rotated about axis 4 to orient it with respect to and form a given angle with the other tubular fitting - in the example shown, tubular outlet fitting 16 - depending on assembly requirements.

In Figure 5, tubular inlet fitting 15 is integral with a sleeve 28 coaxial with axis 4 and fitted to conduit 3 in angularly free manner, with the interposition of two annular seals 29, to rotate with respect to conduit 3 about axis 4. Regardless of the angular position of sleeve 28 about axis 4, channel 19 of tubular inlet fitting 15 communicates with channel 12 via an annular chamber 30, which is defined by sleeve 28 and by an annular groove formed in the outer surface of conduit 3, and communicates with channel 12 via two or more radial holes 31 in conduit 3.

In variations not shown, tubular outlet fitting 16 or both tubular fittings may be orientable.

In both the Figure 1-4 embodiment and Figure 5 variation, tubular inlet and outlet fittings 15, 16 being independent of caps 5 enables removal of caps 5 without separating modules 2.

Moreover, the inside of conduit 3 can be inspected and accessed by simply moving caps 5 slightly from the closed position to relax seals 10 and so free resistors 7, which can thus be simply withdrawn through caps 5.

## Claims

1. A boiler for heating a liquid, in particular water, and comprising at least one module (2a, 2b, 2c) in turn comprising a cylindrical conduit (3) having two open opposite axial ends; two removable caps (5) for closing respective axial ends; an electric resistor (7)-extending the full length of the conduit (3) to define, between itself and the conduit (3), an annular-section channel (12) of the same length as the conduit (3); and a radial tubular inlet fitting (15) and radial tubular outlet fitting (16), which communicate with the annular-section channel (12), are located close to the opposite axial ends of the annular-section channel (12, are separate from the caps (5), are fitted directly to the conduit (3), and communicate with the annular-section channel (12) through respective radial holes (19a, 20a; 31) formed through the conduit (3); **the boiler being characterized in that** the radial tubular inlet fitting (15) and radial tubular outlet fitting (16) are complementary in shape; each removable cap has a central through hole (6) through which the respective electric resistor (7) extends; and sealing means (10) are fitted to each said axial end of the conduit (3), are compressed by the respective caps (5) in the closed position, and, when compressed, secure the electric resistor in fluidtight manner to an inner surface (9) of the conduit (3) and to the caps (5), at said central through holes (6).

2. A boiler as claimed in Claim 1, wherein the fittings (15, 16) form a given angle of 0-180°.

3. A boiler as claimed in Claim 1 or 2, wherein the tubular inlet and outlet fittings (15, 16) have different outside diameters; and one of the tubular fittings (15, 16) has an outside diameter smaller than the inside diameter of the other tubular fitting (16, 15).

4. A boiler as claimed in Claim 3, wherein the tubular fitting (15; 16) with the smaller outside diameter has, on its outer surface, an annular groove engaged by an annular seal (21; 22).

5. A boiler as claimed in Claim 3 or 4, wherein the tubular fitting with the smaller outside diameter is the tubular inlet fitting (15).

6. A boiler as claimed in one of the foregoing Claims, and comprising a hydraulic joint (23), which is connected to the tubular outlet fitting (16), has an outlet (27) connecting the boiler (1) to a user device, and is fitted with a temperature-control probe (26).

7. A boiler as claimed in Claim 6, wherein the tubular outlet fitting (16) has, on its outer surface, an annular groove engaged by an annular seal (22) for fluidtight connection to the hydraulic joint (23).

8. A boiler as claimed in one of the foregoing Claims, and comprising a number of modules (2a, 2b, 2c); the tubular outlet fitting (16) of each module (2a; 2b; 2c) being connected in fluidtight manner to the tubular inlet fitting (15) of the next module (2a; 2b; 2c).

9. A boiler as claimed in Claim 8, wherein the resistors (7) of the modules (2a, 2b, 2c) are electrically independent.

10. A boiler as claimed in any one of the foregoing Claims, wherein the conduit (3) has a longitudinal axis (4); and at least one of the tubular inlet and outlet fittings (15, 16) is fitted to the conduit (3) in angularly free manner to rotate with respect to the conduit (3) about the axis (4).

11. A beverage vending machine comprising a boiler (1) as claimed in any one of the foregoing Claims.

## Patentansprüche

1. Boiler zum Erwärmen einer Flüssigkeit, insbesondere Wasser, und mit wenigstens einem Modul (2a, 2b, 2c), das wiederum eine zylinderförmige Leitung (3) mit zwei offenen, einander entgegengesetzten axialen Enden aufweist, zwei entfernbaren Kappen (5) zum Verschließen jeweiliger axialer Enden, einem elektrischen Widerstand (7), der sich in voller Länge der Leitung (3) erstreckt, so dass dieser zwischen sich und der Leitung (3) einen Ringkanal (12) der gleichen Länge wie die Leitung (3) bildet, und ein radiales, rohrförmiges Einlassstück (15) und ein radiales, rohrförmiges Auslassstück (16), welche mit dem Ringkanal (12) kommunizieren, sind nahe den einander entgegengesetzten axialen Enden des Ringkanals (12) angeordnet, sind von den Kappen (5) getrennt, sind direkt in die Leitung (3) eingepasst und kommunizieren mit dem Ringkanal (12) über jeweilige radiale Löcher (19a, 20a; 31), die durch die Leitung (3) gebildet sind, wobei der Boiler **dadurch gekennzeichnet ist, dass** das radiale, rohrförmige Einlassstück (15) und das radiale, rohrförmige Auslassstück (16) in ihrer Form komplementär sind, jede abnehmbare Kappe eine zentrales Durchgangsloch (6) hat, durch welches sich der jeweilige elektrische Wiederstand (7) hindurch erstreckt, und Dichtungsmittel (10) an jedem axialen Ende der Leitung (3) eingesetzt sind, durch die jeweiligen Kappen (5) in der geschlossenen Position komprimiert werden und im komprimierten Zustand, den elektrischen Widerstand in fluiddichterweise an einer Innenfläche (9) der Leitung (3) und, an den zentralen Durchgangslöchern (6), an den Kappen (5) festlegen.

2. Boiler nach Anspruch 1, in welchem die Stücke (15, 16) einen gegebenen Winkel von 0 bis 180° Grad bilden.

3. Boiler nach Anspruch 1 oder 2, in welchem die rohrförmigen Einlass- und Auslassstücke (15, 16) unterschiedliche Außendurchmesser haben und eines der rohrförmigen Stücke (15, 16) einen kleineren Außendurchmesser als der Innendurchmesser des anderen rohrförmigen Stücks (15, 16) hat.

4. Boiler nach Anspruch 3, in welchem das rohrförmige Stück (15; 16) mit dem kleineren Außendurchmesser auf seiner Außenfläche eine Ringnut hat, in die eine Ringdichtung (21; 22) eingreift.

5. Boiler nach Anspruch 3 oder 4, in welchem das rohrförmige Stück mit dem kleineren Außendurchmesser das rohrförmige Einlassstück (15) ist.

6. Boiler nach einem der vorhergehenden Ansprüche und mit einem HydraulikVerbindungsstück (23) welches mit dem rohrförmigen Auslassstück (16) verbunden ist, einen Auslass (27) aufweist, welcher den Boiler (1) mit einer Benutzereinrichtung verbindet und mit einem Temperatur-Messfühler (26) versehen ist.

7. Boiler nach Anspruch 6, in welchem das rohrförmige Auslassstück (16) auf seiner Außenfläche eine Ringnut hat, in die eine Ringdichtung (22) für eine fluiddichte Verbindung mit dem Hydraulik-Verbindungsstück (23) eingreift.

8. Boiler nach einem der vorhergehenden Ansprüche und mit einer Anzahl von Modulen (2a, 2b, 2c), wobei das rohrförmige Auslassstück (16) jedes Moduls (2a; 2b; 2c) in fluiddichterweise mit dem rohrförmigen Einlassstück (15) des nächsten Moduls (2a; 2b; 2c) verbunden ist.

9. Boiler nach Anspruch 8, in welchem die Widerstände (7) der Module (2a; 2b; 2c) elektrisch unabhängig sind.

10. Boiler nach einem der vorhergehenden Ansprüche, in welchem die Leitung (3) eine Längsachse (4) hat und wenigstens einer der rohrförmigen Einlassund Auslassstücke (15, 16) in einer eckenfreien Weise an der Leitung (3) angebracht ist, um in Bezug zu der Leitung (3) um die Achse (4) drehen zu können.

11. Getränkeverkaufsautomat mit einem Boiler (1) nach einem der vorhergehenden Ansprüche.

## Revendications

1. Chaudière pour chauffer un liquide, en particulier de l'eau, et comprenant au moins un module (2a, 2b, 2c) comprenant à son tour un conduit cylindrique (3) comportant deux extrémités axiales opposées ouvertes ; deux bouchons amovibles (5) pour fermer des extrémités axiales respectives ; une résistance électrique (7) s'étendant sur la longueur entière du conduit (3) pour définir, entre elle-même et le conduit (3), un canal à section annulaire (12) de la même longueur que le conduit (3) ; et un raccord d'entrée tubulaire radial (15) et un raccord de sortie tubulaire radial (16), qui communiquent avec le canal à section annulaire (12), sont situés près des extrémités axiales opposées du canal à section annulaire (12) sont séparés des bouchons (5), sont installés directement sur le conduit (3), et communiquent avec le canal à section annulaire (12) par l'intermédiaire de trous radiaux respectifs (19a, 20a ; 31) formés à travers le conduit (3) ; la chaudière étant **caractérisée en ce que** le raccord d'entrée tubulaire radial (15) et le raccord de sortie tubulaire radial (16) sont complémentaires en forme ; chaque bouchon amovible comporte un trou débouchant central (6) à travers lequel la résistance électrique respective (7) s'étend ; et des moyens d'étanchéité (10) sont installés sur chaque dite extrémité axiale du conduit (3), sont comprimés par les bouchons respectifs (5) dans la position fermée, et, lorsqu'ils sont comprimés, fixent la résistance électrique de manière étanche aux fluides à une surface intérieure (9) du conduit (3) et aux bouchons (5), au niveau desdits trous débouchants centraux (6).

2. Chaudière selon la revendication 1, dans laquelle les raccords (15, 16) forment un angle donné de 0 à 180°.

3. Chaudière selon la revendication 1 ou 2, dans laquelle les raccords d'entrée et de sortie tubulaires (15, 16) possèdent des diamètres extérieurs différents ; et un des raccords tubulaires (15, 16) possède un diamètre extérieur inférieur au diamètre intérieur de l'autre raccord tubulaire (16, 15).

4. Chaudière selon la revendication 3, dans laquelle le raccord tubulaire (15 ; 16) avec le diamètre extérieur plus petit comporte, sur sa surface extérieure, une rainure annulaire avec laquelle entre en prise un dispositif d'étanchéité annulaire (21 ; 22).

5. Chaudière selon la revendication 3 ou 4, dans laquelle le raccord tubulaire avec le diamètre extérieur plus petit est le raccord d'entrée tubulaire (15).

6. Chaudière selon une des revendications précédentes, et comprenant un joint hydraulique (23), qui est raccordé au raccord de sortie tubulaire (16), comporte une sortie (27) raccordant la chaudière (1) à un dispositif utilisateur, et est équipé d'une sonde de régulation de température (26).

7. Chaudière selon la revendication 6, dans laquelle le raccord de sortie tubulaire (16) comporte, sur sa surface extérieure, une rainure annulaire avec laquelle entre en prise un dispositif d'étanchéité annulaire (22) pour le raccordement étanche aux fluides au joint hydraulique (23).

8. Chaudière selon une des revendications précédentes, et comprenant un nombre de modules (2a, 2b, 2c) ; le raccord de sortie tubulaire (16) de chaque module (2a ; 2b ; 2c) étant raccordé de manière étanche aux fluides au raccord d'entrée tubulaire (15) du module suivant (2a ; 2b ; 2c).

9. Chaudière selon la revendication 8, dans laquelle les résistances (7) des modules (2a, 2b, 2c) sont électriquement indépendantes.

10. Chaudière selon une quelconque des revendications précédentes, dans laquelle le conduit (3) possède un axe longitudinal (4) ; et au moins un des raccords d'entrée et de sortie tubulaires (15, 16) est installé sur le conduit (3) de manière angulairement libre pour tourner par rapport au conduit (3) autour de l'axe (4).

11. Distributeur automatique de boissons comprenant une chaudière (1) selon une quelconque des revendications précédentes.
